# EUROPEAN PATENT APPLICATION

(11) **EP 4 542 441 A1**
(43) Date of publication of application: **23.04.2025**
(21) Application number: 23858925.3
(22) Date of filing: 03.07.2023
(51) Int. Cl.: G06K 7/10, G06K 17/00

(54) **LIGHT-TRIGGERED RFID IDENTIFICATION METHOD AND SYSTEM**

(30) Priority: 29.08.2022 CN 202211038354
(71) Applicant: Guangdong Shixin Microelectronics Technology Co., Ltd., Guangzhou, Guangdong 510670 (CN)
(72) Inventor: YU, Zhengming, Guangzhou, Guangdong 510670 (CN); WU, Jixiong, Guangzhou, Guangdong 510670 (CN)
(74) Representative: Plavsa, Olga
(86) International application number: PCT/CN2023/105510
(87) International publication number: WO 2024/045887

(57) **Abstract**

The present invention relates to the field of radio frequency identification (RFID), and particularly relates to a light-triggered radio frequency identification (RFID) method and system. The method includes the following two light-trigged RFID access identification modes: a direct light-triggered mode: an RFID reader emits a continuous pure carrier to provide energy to a tag, and upon receiving an illumination with a certain intensity, the tag with a photoinduction detection module directly triggers to the tag to send tag information including an ID number to the reader; and a command light-trigged mode: upon receiving a read command of the reader, the tag with the photoinduction detection module does not response to the reader immediately but triggers the tag to send the information including the ID number to the reader upon receiving the illumination with the certain intensity. The method provided by the present invention can convert an optical signal into an electric signal and trigger tag access identification of an RFID system, and can identify, position, and bind the tag rapidly in a multi-tag intensive reading application, so that miss reading and jump reading of the tag are effectively avoided, the sorting and positioning efficiencies are improved, and the application cost of the RFID system is lowered.

## Description

### TECHNICAL FIELD

The present invention relates to the field of radio frequency identification (RFID), and particularly relates to a light-triggered radio frequency identification (RFID) method and system.

### BACKGROUND

The radio frequency identification (RFID) technology is also referred to as an electronic tag technology, which is a non-contact automatic identification technology. The basic working principle of the RFID technology is that an identified object is automatically identified by means of a coupled transmission characteristic between a radio frequency signal and an inductance or electromagnetic space. An RFID system usually includes three parts: an RFID electronic tag (Tag), a reader (Reader), and a computer application system.

A basic working flow is as follows: the reader sends a radio frequency signal with a special working frequency through a radio frequency emitting antenna. When a passive tag enters a working coverage area of the emitting antenna of the reader, it will be activated by the induce current , which is generated through inductance or electromagnetic space coupling of the antenna of the tag (an active tag needs not to be activated and is always in a working state); part of the energy obtained by the tag is rectified to a DC power supply which is provided to support an electronic circuit in the tag to work and the other part is modulated by data information stored in the tag and reflected back to the reader through the tag antenna; the reader receives a carrier signal reflected back by the electronic tag through a receiving antenna, and demodulates and decodes the received signal to obtain identification data information stored in the electronic tag and send the identification data information to the computer application system through a communication interface for processing.

A sorting system of logistics is a key link in the logistics industry, which directly affects the efficiency and cost of the whole industry. There are three common article sorting methods: manual sorting, semi-automatic mechanical sorting, and automatic sorting.

In an automatic sorting system, the identification of an article tag is one of the key technologies, which directly affects the speed and error rate of the automatic sorting. A conventional tag identification technology uses barcodes, and in the sorting process, articles are sorted by identifying the barcodes. The barcode identification technology has the following shortcomings: 1, the barcode is a visual identification technology; when the barcode is read, it can only be scanned when a light source directly illuminates the surface of the barcode. Therefore, during sorting, it is often needed to place an article with one side where the barcode is pasted manually or through a device, so that the barcode can be identified; 2, the transportation or sorting process easily causes the surface of the barcode to be torn, stained and the like, and in this case, the barcode cannot be scanned; and 3, the barcode information can only be read rather than altered, so that a further refined management requirement in a logistics sorting process cannot be met well.

The RFID technology with advantages of non-contact wireless mobile identification, longer effective identification distance, higher identification speed, large storage capacity of data information stored in the tag, high environmental applicability is used to replace the barcode technology in the sorting link by many logistics enterprises. However, in application scenarios such as logistics sorting, articles on a sorting belt need to be identified and bound one by one rapidly, and jump reading and miss reading are not allowed. Taking aviation logistics sorting as an example, when travelers consign luggage, a luggage sorting system needs to identify the luggage on a rapidly running conveyor belt one by one and bind with information such as flight passengers and tray position numbers on the background, so as to accurately sort and consign the luggage. The processing course of express logistics sorting is similar.

In order to solve the miss reading problem, it is usually needed to increase the output power of an RFID reader, which, in return, will lead to jump reading of RFID tags of articles front and back. Miss reading and jump reading bring huge trouble to identify and bind tags one by one in the sorting process, which is solved by taking many extra measures, thereby, not only increasing the system cost, but also affecting the sorting efficiency.

### SUMMARY

To solve the problems in the background art, an objective of the present invention is to provide a light-triggered radio frequency identification (RFID) method and system, which can convert an optical signal into an electric signal and trigger tag access identification of an RFID system, and can identify, position, and bind the tag rapidly in a multi-tag intensive reading application, so that miss reading and jump reading of the tag are not effectively allowed, the sorting and positioning efficiencies are improved, and the application cost of the RFID system is lowered.

In one aspect, the light-triggered RFID method provided by the present invention includes the following two light-triggered RFID access identification modes:
In a direct light-triggered mode: emitting, by an RFID reader, a continuous pure carrier to provide energy to the tag, rather than sending a related read command, and within an antenna coverage area of the reader, upon receiving an illumination with a certain intensity, directly triggering the tag with a photoinduction detection module to send information including an ID number of the tag to the reader; and
in the command light-trigged mode: emitting, by the RFID reader, the continuous pure carrier to provide the energy to the tag and sending the related read command, where within the antenna coverage area of the reader, upon receiving the read command of the reader, the tag with the photoinduction detection module does not response to the reader immediately but triggers the tag to send the tag information including the ID number to the reader upon receiving the illumination with the certain intensity.

In another aspect, the present invention provides a light-triggered Radio Frequency Identification (RFID) system, configured to implement the light-triggered RFID identification method, including:
a tag, additionally provided with the working mode flag bits to selectively enter a direct light-triggered mode, a command light-triggered mode or a common RFID mode according to the values of the flag bits, and additionally provided with an optical signal induction detection device to detect an optical signal and convert the optical signal into an electric signal, so as to trigger the tag to send tag information including an ID number of the tag to a reader;
the reader, additionally provided with a working mode flag bit setting command, where the working mode flag bit of the tag is set anytime according to an application demand in an initializing or working process;
a light emission device, configured to emit light and located with an antenna coverage area of the reader; and
a tag optical signal induction detection device, configured to detect an illumination intensity and trigger the tag to send the tag information including the ID number to the reader when the illumination intensity reaches a preset intensity.

Optionally, the light emission device includes the following three light-emitting modes: A1, A2, and A3:
A1, the reader electrically connected to the light emission device controls the light emission device to emit light or not;
A2, when exposed to a preset illumination setting region, the tag in a moving state automatically triggers the light emission device to emit light; and
A3, a human or a computer controls the light emission device to emit light.

Optionally, the tag is provided with a chip and an antenna electrically connected, the tag is provided with a photosensitive window, and the photosensitive window is correspondingly located at the chip.

Optionally, the reader is additionally provided with a special tag access identification command flow according to two different light-triggered working modes set thereby.

Optionally, when the RFID system is in the direct light-triggered mode, an emitting channel of the reader continuously emits a pure carrier signal or receives an external control signal to continuously emit the pure carrier signal within a period of time, and correspondingly, a receiving channel is continuously in a state of waiting for receiving the tag information or synchronous to the emitting channel to be continuously in the state of waiting for receiving the tag information within a period of time.

Optionally, when the RFID system is in the direct light-triggered mode, if there is a tag in the antenna coverage area of the reader and the tag receives enough energy of electromagnetic radiation, the system directly sends the information including the ID number of the tag after the tag is triggered by the light emitted by the light emission device.

Optionally, when the RFID system is in the command light-triggered mode, an emitting channel of the reader alternately emits a pure carrier signal or a related tag read command according to a regulation of a command flow; and a receiving channel is continuously in a state of waiting for receiving the tag information and matches with the emitting channel according to the regulation of the command flow to complete a reading process of the tag.

Optionally, when the RFID system is in the command light-triggered mode, if there is a tag in the antenna coverage area of the reader and the tag has received enough energy of electromagnetic radiation, the tag, upon receiving a read command of the reader, does not response to the reader but triggers the tag to send the tag information including the ID number to the reader upon receiving an illumination with a certain intensity and meeting conditions of a related command flow and an anti-collision algorithm requirement.

Compared to the prior art, the present invention has the following beneficial effects:
The present invention can be applied to fields such as logistics sorting, can convert an optical signal into an electric signal, and can identify, position, and bind the tag rapidly through the light-triggered RFID technology in the direct light-triggered mode and the command light-triggered mode. The present invention may not effectively miss reading and jump reading of RFID tags in application scenarios such as rapid article sorting and high-capacity dense article positioning and identification, and can efficiently obtain tag information including the ID number of the tag, thereby improving the logistics sorting and positioning efficiency and lowering the using cost of the RFID system.

### BRIEF DESCRIPTION OF THE DRAWINGS

FIG. 1 is a reporting flowchart of information of a tag such as an ID number in a direct light-triggered mode, a command light-triggered mode, and a common RFID mode.
FIG. 2 is a schematic diagram of a light-triggered RFID tag.

Numerals in the drawings: 1, chip; 2, photosensitive window; 3, antenna.

### DETAILED DESCRIPTION OF THE EMBODIMENTS

### Embodiment I

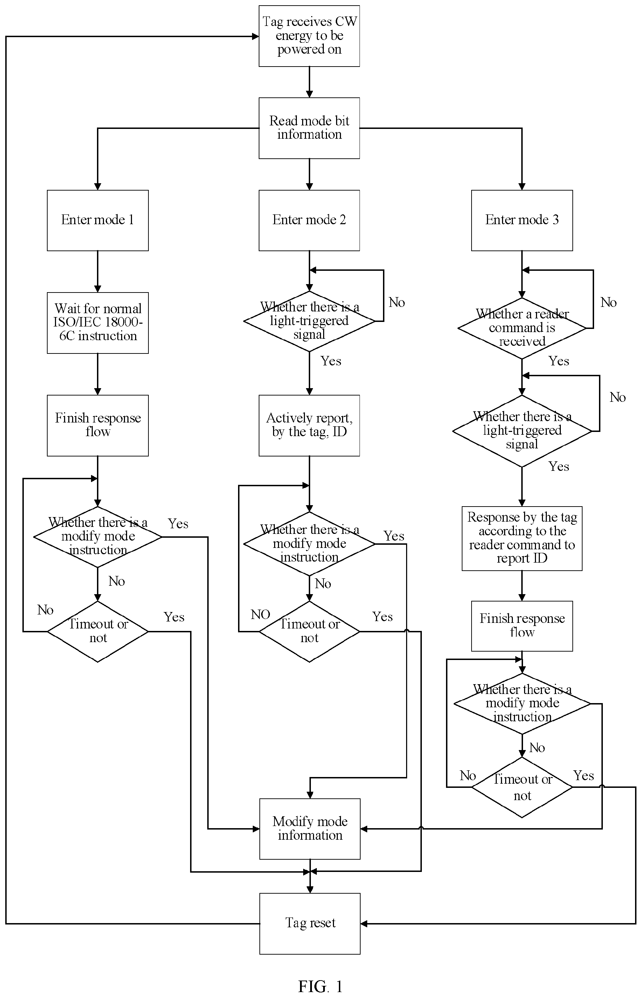

In an existing RFID system, upon receiving enough energy and read commands sent by reader, tags in the antenna coverage area of the reader will randomly response to the reader in an anti-collision mechanism and return tag information such as ID number. The chances that all tags within the antenna coverage area responding to the reader are equal and random. As shown in FIG 1, the present invention provides a new identification method, i.e., a light-triggered RFID method, including the following two light-triggered RFID access identification modes:
in the direct light-triggered mode, emitting, by an RFID reader, a continuous pure carrier (CW) to provide energy to the tag, rather than sending a related read command, and within an antenna coverage area of the reader, upon receiving an illumination with a certain intensity, directly triggering the tag to send information including an ID number to the reader; and
in the command light-trigged mode: emitting, by the RFID reader, the continuous pure carrier to provide the energy to the tag and sending the related read command, where within the antenna coverage area of the reader, upon receiving the read command of the reader, the tag with the photoinduction detection module does not response to the reader immediately but triggers the tag to send the tag information including the ID number to the reader upon receiving the illumination with the certain intensity.

It further includes a working mode compatible with an existing RFID international/national standard (for example, international standard ISO/IEC 18000-6C and the like), so that the system is better in compatibility.

### Embodiment II

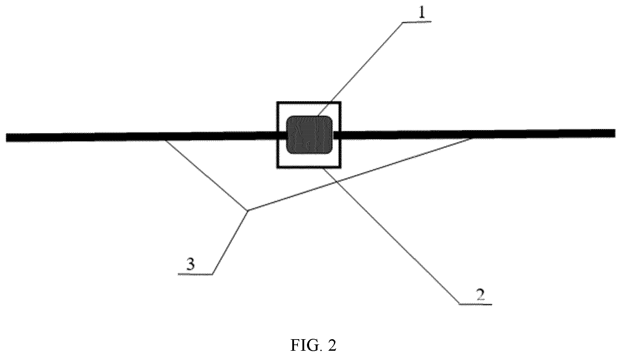

As shown in FIG. 1 and FIG 2, the present invention provides a light-triggered radio frequency identification (RFID) system, configured to implement the light-triggered RFID method in the embodiment I. The light-triggered RFID system includes a tag, a reader, a light emission device, and a tag optical signal induction detection device.

A tag is additionally provided with the working mode flag bits to selectively enter a direct light-triggered mode, a command light-triggered mode or a common RFID identification mode according to the values of the flag bits, and additionally provided with an optical signal induction detection device to inductively detect an optical signal and convert the optical signal into an electric signal, so as to trigger the tag to send tag information including an ID number to a reader; the tag is provided with a chip 1 and an antenna 3 electrically connected, the tag is provided with a photosensitive window 2, and the photosensitive window 2 is correspondingly located at the chip 1.

The reader is additionally provided with the working mode flag bit setting command, the working mode flag bits of the tag are set anytime according to an application demand in an initializing or working process, and the reader is additionally provided with a special tag access identification command flow according to two different light-triggered working modes; when the RFID system is in the direct light-trigged mode, an emitting channel of the reader continuously emits a pure carrier signal or receives an external control signal to continuously emit the pure carrier signal within a period of time, and correspondingly, a receiving channel is continuously in a state of waiting for receiving the tag information or synchronous to the emitting channel to be continuously in the state of waiting for receiving the tag information within a period of time; when the RFID system is in the direct light-triggered mode, if there is a tag in the antenna coverage area of the reader and the tag receives enough energy of electromagnetic radiation, it directly sends the tag information including the ID number after the tag is triggered by the light emitted by the light emission device. When the RFID system is in the command light-triggered mode, an emitting channel of the reader alternately emits a pure carrier signal or a related tag read command according to a regulation of a command flow; and a receiving channel is continuously in a state of waiting for receiving the tag information and matches with the emitting channel according to the regulation of the command flow to complete a reading process of the tag. When the RFID system is in the command light-triggered mode, if there is a tag in the antenna coverage area of the reader and the tag has received enough energy of electromagnetic radiation, the tag, upon receiving a read command of the reader, does not response to the reader but triggers the tag to send the tag information including the ID number to the reader upon receiving an illumination with a certain intensity and meeting conditions of a related command flow and an anti-collision algorithm requirement.

The light emission device is configured to emit light, the light is visible light or invisible light, the light emission device is located within the antenna coverage area of the reader, and the light emitting device includes the following three light-emitting modes : A1, A2, and A3.
A1, the reader electrically connected to the light emission device controls the light emission device to emit light or not;
A2, when exposed to a preset illumination setting region, the tag in a moving state automatically trigger the light emission device to emit light; and
A3, a human or a computer controls the light emission device to emit light.
the tag optical signal induction detection device is configured to detect an illumination intensity and trigger the tag to send the information including the ID number to the reader when the illumination intensity reaches a preset intensity.

### Embodiment III

According to a light-triggered RFID system provided in the embodiment, a flow that the tag sends the ID number is as follows:
S1, the tag receives energy of electromagnetic radiation and converts the energy into a DC power supply under which the tag works, where a logical processor can start to work normally, indicating that power-on is completed, and after being powered on, the tag automatically enters one of three working modes according to the values of working mode flag bits; no matter what mode the tag works, when the tag does not send information to the reader, the tag is in a state of receiving the command of the reader;
when the tag is in the command light-triggered mode, the tag can match with a timer or equipment such as photo eyes connected to the reader in use;
S2, the tag processor performs mode conversion according to the working mode flag bit state:
   the direct light-triggered mode includes the following steps B1.1-B1.3:
      B1.1, when the tag enters the direct light-triggered mode, the tag processor detects whether a light triggered signal is received or not;
      B1.2, after the tag processor determines the light triggered signal, the tag sends information including its own ID number to the reader; and
      B1.3, after the information including the ID number of the tag is completely sent, the tag enters an instruction receiving state, and if no reader instruction is received within stipulated time, an inventory period is finished, and the tag is powered down;
      the command light-triggered mode includes the following steps C1.1-C1.4:
         C1.1, when entering the command light-triggered mode, the tag receives the read command of the reader or not;
         C 1.2, when the tag receives the read command of the reader, the tag processor detects whether a light triggered signal is received or not;
         C1.3, after the tag processor determines the light triggered signal, the tag sends information including its own ID number according to the reader instruction; and
         C1.4, after the information including the ID number of the tag is completely sent, the tag enters an instruction receiving state, and if no modify mode instruction is received within stipulated time, an inventory period is finished, and the tag is powered down.

The present invention can be applied to fields such as logistics sorting, can convert an optical signal into an electric signal, and can identify, position, and bind the tag rapidly through the light-triggered RFID technology in the direct light-triggered mode and the command light-triggered mode. The present invention may effectively not allow miss reading and jump reading of RFID tags in application scenarios such as rapid article sorting and high-capacity dense article positioning and identification, and can efficiently obtain tag information including the ID number of the tag, thereby improving the logistics sorting and positioning efficiency and lowering the using cost of the RFID system.

Detailed description has been made on the implementations of the present invention in combination of the draws above. But the present invention is not limited to the abovementioned implementations. Those of ordinary skill in the art can further make various variations without departing from the purpose of the present invention within the radius of knowledge.

## Claims

1. A light-triggered radio frequency identification (RFID) method, **characterized by** comprising:
converting, by a tag, energy of electromagnetic radiation received, into a direct current working power supply under which the tag works, wherein a logic processor can start to work normally, indicating that power-on is completed, and after being powered on, the tag automatically entering one of three working modes according to the values of working mode flag bits, wherein the three working modes comprise a direct light-triggered mode, a command light-triggered mode, and a common RFID identification mode;
a reader, additionally provided with the working mode flag bit setting command, wherein the working mode flag bits of the tag are set anytime according to an application demand in an initializing or working process;
in the direct light-triggered mode, emitting, by an RFID reader, a continuous pure carrier to provide energy to the tag, rather than sending a related read command, and within an antenna coverage area of the reader, when a tag receives an illumination with a certain intensity, directly triggering the tag to send tag information comprising an ID number to the reader; and
in the command light-trigged mode: emitting, by the RFID reader, the continuous pure carrier to provide the energy to the tag and sending the related read command, wherein within the antenna coverage area of the reader, upon receiving the read command of the reader, the tag with the photoinduction detection module does not response to the reader immediately but triggers the tag to send the information comprising the ID number to the reader upon receiving the illumination with the certain intensity.

2. Alight-triggered Radio Frequency Identification (RFID) system, configured to implement the light-triggered RFID method according to claim 1, **characterized by** comprising:
a tag, additionally provided with the working mode flag bits to selectively enter a direct light-triggered mode, a command light-triggered mode or a common RFID mode according to the values of the flag bits, and additionally provided with an optical signal induction detection device to detect an optical signal and convert the optical signal into an electric signal, so as to trigger the tag to send tag information comprising an ID number of the tag to a reader;
the reader, additionally provided with a working mode flag bit setting command, wherein the working mode flag bits of the tag are set anytime according to an application demand in an initializing or working process;
a light emission device, configured to emit light and located with an antenna coverage area of the reader, the light being visible light or invisible light; and
the tag optical signal induction detection device, configured to detect an illumination intensity and trigger the tag to send the information comprising the ID number to the reader when the illumination intensity reaches a preset intensity.

3. The light-triggered RFID identification system according to claim 2, **characterized in that** the light emission device comprises the following three light-emitting modes: A1, A2, and A3:
A1, the reader electrically connected to the light emission device controls the light emission device to emit light or not;
A2, when exposed to a preset illumination set region, the tag in a moving state automatically triggers the light emission device to emit light; and
A3, a human or a computer controls the light emission device to emit light.

4. The light-triggered RFID system according to claim 2, **characterized in that** the tag is provided with a chip and an antenna electrically connected, the tag is provided with a photosensitive window, and the photosensitive window is correspondingly located at the chip.

5. The light-triggered RFID system according to claim 2, **characterized in that** the reader is additionally provided with a special tag access identification command flow according to two different light-triggered working modes set thereby.

6. The light-triggered RFID system according to claims 2 or 5, **characterized in that** when the RFID system is in the direct light-triggered mode, an emitting channel of the reader continuously emits a pure carrier signal or receives an external control signal to continuously emit the pure carrier signal within a period of time, and correspondingly, a receiving channel is continuously in a state of waiting for receiving the tag information or synchronous to the emitting channel to be continuously in the state of waiting for receiving the tag information within a period of time.

7. The light-triggered RFID system according to claims 2 or 5, **characterized in that** when the RFID identification system is in the direct light-triggered mode, if there is a tag in the antenna coverage area of the reader and the tag receives enough energy of electromagnetic radiation, the system directly sends the information comprising the ID number after the tag is triggered by the light emitted by the light emission device.

8. The light-triggered RFID system according to claims 2 or 5, **characterized in that** when the RFID system is in the command light-triggered mode, an emitting channel of the reader alternately emits a pure carrier signal or a related tag read command according to a regulation of a command flow; and a receiving channel is continuously in a state of waiting for receiving the tag information and matches with the emitting channel according to the regulation of the command flow to complete a reading process of the tag.

9. The light-triggered RFID system according to claims 2 or 5, **characterized in that** when the RFID system is in the command light-triggered mode, if there is a tag in the antenna coverage area of the reader and the tag has received enough energy of electromagnetic radiation, the tag, upon receiving a read command of the reader, does not response to the reader but triggers the tag to send the information comprising the ID number to the reader upon receiving an illumination with a certain intensity and meeting conditions of a related command flow and an anti-collision algorithm requirement.
